# EUROPÄISCHE PATENTSCHRIFT

(11) **EP 1 747 727 B1**
(45) Veröffentlichungstag und Bekanntmachung des Hinweises auf die Patenterteilung: **02.11.2011**
(21) Anmeldenummer: 06014518.2
(22) Anmeldetag: 13.07.2006
(51) Int. Cl.: A23B 4/28, A22C 9/00

(54) **Vorrichtung zur Bearbeitung von Lebensmitteln mit Injektionsnadeln**
Device for treating food by injection needles
Dispositif de traitement de produits alimentaires avec aiguille d'injection

(30) Priorität: 30.07.2005 DE 202005012005 U
(43) Veröffentlichungstag der Anmeldung: 31.01.2007
(73) Patentinhaber: Schröder Maschinenbau KG, 33824 Werther (DE)
(72) Erfinder: Umbach, Christoph, 33824 Werther (DE)
(74) Vertreter: Wiebusch, Manfred

(56) Entgegenhaltungen:
- EP-A1- 0 396 847
- EP-A2- 1 230 859
- US-A- 5 012 728

## Beschreibung

Die Erfindung betrifft eine Vorrichtung zur Bearbeitung von Lebensmitteln, mit einem Förderer zur Zufuhr der Lebensmittel, einem Nadelträger, der eine Anzahl von Nadeln trägt und in Bezug auf den Förderer derart hin und hergehend bewegbar ist, daß die Nadeln in die Lebensmittel einstechen, und mit den einzelnen Nadeln zugeordneteten Kolben und Zylindern und einem an die Zylinder angeschlossenen Fluidsystem zur Steuerung einer Einfahrbewegung der Nadeln in den Nadelträger.

In der Lebensmittelindustrie, insbesondere in der Fleischindustrie, gibt es verschiedene Bearbeitungsprozesse, bei denen Nadeln in die Lebensmittel eingestochen werden. Dies gilt beispielsweise für sogenanntes Steaker, mit denen Fleisch durch das Einstechen von Nadeln weich gemacht werden soll, sowie auch für Pökelmaschinen, bei denen mit Hilfe hohler Nadeln Pökellake in das Fleisch injiziert wird.

Bei bestimmten Arten von Lebensmitteln, beispielsweise bei Knochenschinken, sollten die Nadeln nicht starr am Nadelträger angebracht sein, weil sie sonst abbrechen würden, wenn sie auf einen Knochen treffen. Für diese Anwendungsfälle ist es bekannt, die Nadeln mechanisch, pneumatisch oder hydraulisch abzufedern, so daß sie beim Auftreffen auf einen Knochen in den Nadelträger zurückfahren können. Aus EP 1 230 859 A2 ist eine Pökelmaschine mit hydraulisch abgefederten Nadeln bekannt, die die Merkmale des Oberbegriffs des Anspruchs 1 aufweist.

Häufig sind Vorrichtungen der hier betrachteten Art zusammen mit anderen gleichartigen oder verschiedenartigen Vorrichtungen in eine Prozeßstraße integriert, so daß verschiedene Bearbeitungsschritte, beispielsweise Pökeln und Steaken, im Takt des Förderers nacheinander ausgeführt werden können. Dabei ist es zweckmäßig, durch eine mechanische Kopplung der Antriebe des Förderers und der einzelnen Vorrichtungen sicherzustellen, daß die Vorrichtungen synchron mit dem Takt des Förderers arbeiten.

Aufgabe der Erfindung ist es, eine Vorrichtung zum Bearbeiten von Lebensmitteln zu schaffen, bei der einfach zwischen unterschiedlichen Betriebsarten umgeschaltet werden kann.

Diese Aufgabe wird bei einer Vorrichtung der eingangs genannten Art dadurch gelöst, daß das Fluidsystem dazu ausgebildet ist, in den Zylindern einen Unterdruck zu erzeugen, der ein Einziehen der Nadeln in den Nadelträger bewirkt.

Die den einzelnen Nadeln zugeordneten Kolben und Zylinder und das Fluidsystem, die bisher nur dazu dienten, die Nadeln beim Auftreffen auf ein Hindernis abzufedern, erhalten nun eine zusätzliche Funktion, nämlich die Funktion, die Nadeln aktiv in den Nadelträger zurückzuziehen und sie dadurch unwirksam zu machen. Auf diese Weise läßt sich die Vorrichtung durch einen einfachen Umschaltvorgang, nämlich durch Anlegen eines Unterdruckes an die Zylinder, in einen Durchlaufmodus umschalten, in dem die Nadeln auch dann nicht in die Lebensmittel einstechen, wenn der Nadelträger an das Antriebssystem angekoppelt bleibt und weiterhin die hin- und hergehenden Bewegungen in Bezug auf den Förderer ausführt. Auf diese Weise ist es möglich, die Vorrichtung oder Teile derselben einfach und schnell unwirksam zu schalten, ohne daß dazu in umständlicher Weise in das Antriebssystem eingegriffen werden muß. Dies erweist sich als besonders vorteilhaft, wenn die Vorrichtung in eine Fertigungsstraße integriert ist und der Hub des Nadelträgers mit dem Arbeitstakt des Förderers und/oder vor- oder nachgeschalteter anderer Vorrichtungen synchronisiert ist.

Vorteilhafte Ausgestaltungen und Weiterbildungen der Erfindung sind in den Unteransprüchen angegeben.

Unter anderem bietet die Erfindung die vorteilhafte Möglichkeit, einen Steaker und eine Pökelmaschine antriebsmäßig miteinander zu koppeln oder sogar die Steaker-Nadeln und die Pökelnadeln auf einem gemeinsamen Nadelträger anzuordnen, wobei sich dann die Funktionen des Steakers und der Pökelvorrichtung auf einfache Weise nach Bedarf zu- oder abschalten lassen.

Ebenso ermöglicht es die Erfindung, die Intensität der Bearbeitung durch Zu- oder Abschalten einzelner Nadeleinheiten zu variieren. Auch in dem Fall können die verschiedenen Nadeleinheiten auf einem gemeinsamen Träger angeordnet oder sogar ineinander verschachtelt sein, sofern nur für die verschiedenen Nadeleinheiten unabhängig voneinander umschaltbare Fluidsysteme vorgesehen sind.

Bevorzugt handelt es sich bei dem Fluidsystem um ein pneumatisches System. Im Fall einer Pökelmaschine ist dann zusätzlich ein an sich bekanntes Ventilsystem erforderlich, mit dem die Zufuhr der Pökellake zu den Nadeln gesteuert wird.

Das Fluidsystem und die Kolben und Zylinder können in bekannter Weise dazu dienen, eine Abfederung der Nadeln zu ermöglichen, sie können jedoch wahlweise auch ausschließlich zu dem Zweck vorgesehen sein, die Umschaltung zwischen dem Durchlaufmodus und dem aktiven Modus zu ermöglichen.

Häufig weisen Vorrichtungen der hier betrachteten Art einen Niederhalter oder Abstreifer auf, der beweglich am Nadelträger angeordnet ist und dazu dient, die Lebensmittel zurückzuhalten, wenn die Nadeln wieder aus den Lebensmitteln herausgezogen werden. Der Niederhalter weist dann ein der Anordnung der Nadeln entsprechendes Raster von Bohrungen auf, durch welche die einzelnen Nadeln hindurchtreten. Bei einer solchen Vorrichtung ist es zweckmäßig, den Niederhalter während des Durchlaufbetriebs oder zumindest bei der Umschaltung vom Durchlaufmodus in den aktiven Modus dicht an den Nadelträger heranzuführen, so daß die Nadeln, wenn sie wieder aus dem Nadelträger ausgefahren werden, sicher und störungsfrei in die Bohrungen des Niederhalters eintreten.

Im folgenden werden Ausführungsbeispiele der Erfindung anhand der Zeichnungen näher erläutert.

Es zeigen:
- Fig. 1: einen schematischen Schnitt durch einen Steaker gemäß einer Ausführungsform der Erfindung;
- Fig. 2: den Steaker nach Figur 1 während eines Arbeitstaktes;
- Fig. 3: den Zustand des Steakers nach Figuren 1 und 2 in einem Durchlaufmodus, mit eingezogenen Nadeln;
- Fig. 4: den Zustand des Steakers beim Umschalten vom Durchlaufmodus in den aktiven Modus, unmittelbar vor dem Ausfahren der Nadeln;
- Fig. 5: einen schematischen Längsschnitt einer Fertigungsstraße mit einem Steaker und einer Pökelvorrichtung; und
- Fig. 6: einen Schnitt durch einen Fluidverteiler eines Steakers oder einer Pökelvorrichtung gemäß einem modifizierten Ausführungsbeispiel.

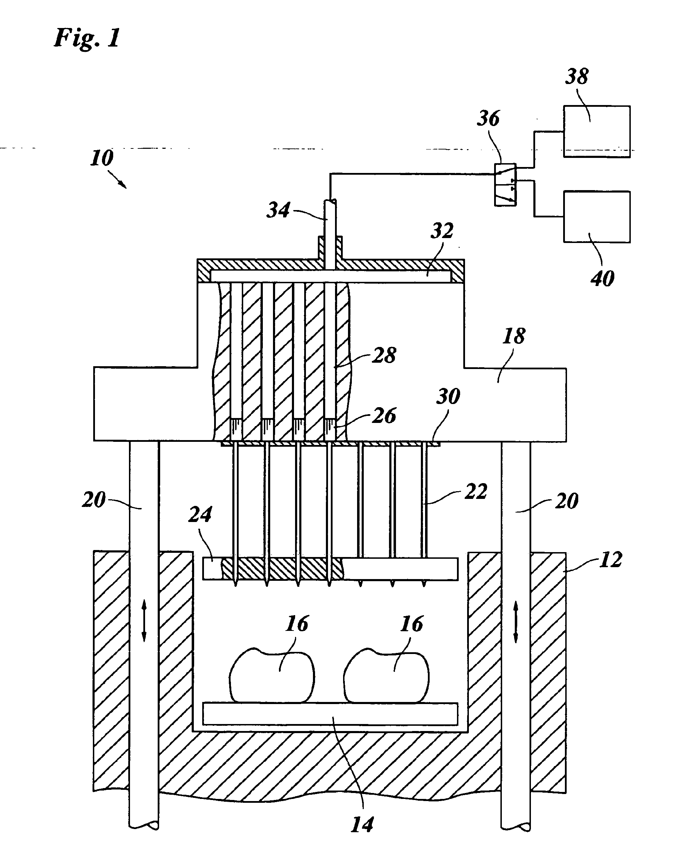

Figur 1 zeigt einen Steaker 10 mit einem Gestell 12, das von einem Förderer 14 zur Zufuhr von Lebensmitteln 16 durchlaufen wird. Die Förderrichtung ist senkrecht zur Zeichenebene in Figur 1.

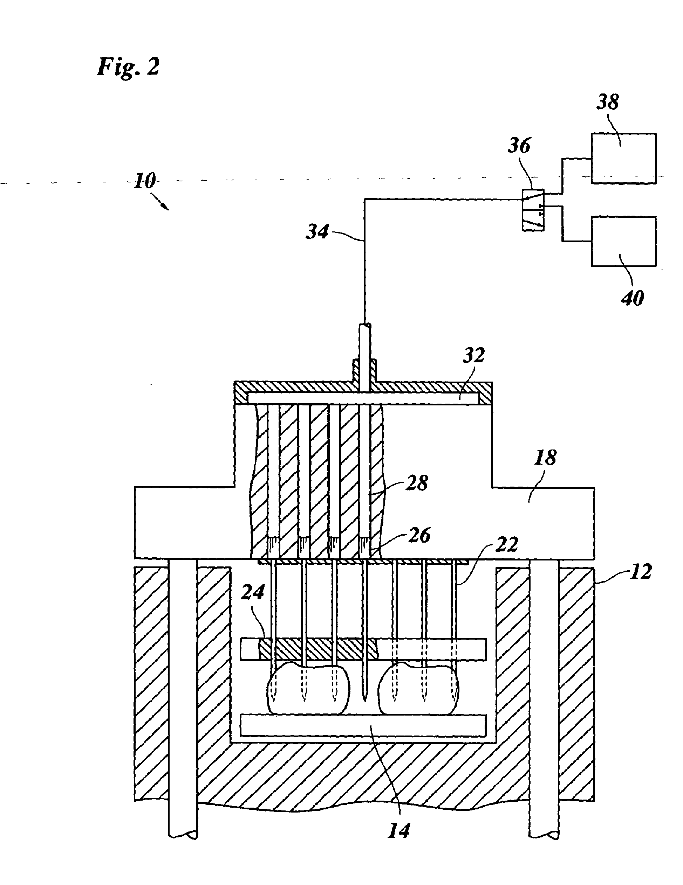

Oberhalb des Gestells 12 ist ein Nadelträger 18 angeordnet, der mit Hubstangen 20 vertikalbeweglich am Gestell 12 geführt ist und mit Hilfe eines nicht gezeigten Antriebs im Takt des Förderers 14 auf und ab bewegt wird. Der Nadelträger 18 trägt eine Anzahl von senkrecht nach unten vorspringenden Nadeln 22, die beim Absenken des Nadelträgers in die Lebensmittel 16 einstechen. Die Nadeln 22 sind in einem zweidimensionalen Raster angeordnet, so daß, in Figur 1 nicht erkennbar, jeweils mehrere Nadeln 22 in der Richtung senkrecht zur Zeichenebene hintereinanderliegen. Die Nadeln 22 verlaufen durch Bohrungen eines Niederhalters 24, der in nicht näher gezeigter Weise vertikalbeweglich am Nadelträger 18 gehalten ist und beispielsweise elastisch nach unten vorgespannt ist, so daß er sich beim Absenken des Nadelträgers 18 auf die Lebensmittel 16 auflegt und dann in dieser Position verbleibt, während die Nadeln 22 weiter in die Lebensmittel 16 einstechen, wie in Figur 2 gezeigt ist. Bei der Aufwärtsbewegung des Nadelträgers 18 sorgt dann der Niederhalter 24 dafür, daß die Lebensmittel 16 von den Nadeln 22 abgestreift und auf dem Förderer 14 gehalten werden, bis sich schließlich auch der Niederhalter wieder von den Lebensmitteln abhebt, so daß ein neuer Förder- und Arbeitstakt beginnen kann.

Jede Nadel 22 trägt am oberen Ende einen Kolben 26, der verschiebbar und fluiddicht in einem im Nadelträger 18 ausgebildeten Zylinder 28 geführt ist.

Eine Anschlagplatte 30 begrenzt die Bewegung der Kolben 26 und der Nadeln 22 nach unten.

Die Zylinder 28 öffnen sich am oberen Ende in eine gemeinsame Verteilerkammer 32, die über eine Druckluftleitung 34 und ein Umschaltventil 36 wahlweise mit einer Druckluftquelle 38 oder einer Unterdruckquelle 40 verbindbar ist. In Figuren 1 und 2 ist die Druckluftleitung 34 mit der Druckluftquelle 38 verbunden, so daß die Kolben 26 und die Nadeln 22 pneumatisch in ihrer unteren Endlage gehalten werden. Der von der Druckluftquelle 38 erzeugte Druck ist so groß, daß der Widerstand beim Eindringen der Nadeln 22 in die Lebensmittel 16 überwunden werden kann. Falls jedoch eine oder mehrere Nadeln auf ein härteres Hindernis, beispielsweise einen Knochen treffen sollten, läßt sich die Druckluft im Pneumatiksystem, d.h., in den Zylindern 28, der Verteilerkammer 32 und der Druckluftleitung 34 so weit komprimieren, daß die betreffenden Nadeln nach oben ausweichen können, wobei die Kolben 26 in die zugehörigen Zylinder 28 einfahren.

Statt die Zylinder 28 mit einer Druckluftquelle zu verbinden, ist es in einer anderen Ausführungsform auch möchlich, die Druckluftleitung 34 einfach zu belüften und dann abzusperren, so daß ein Luftpolster in jedem der Zylinder 28 gebildet wird.

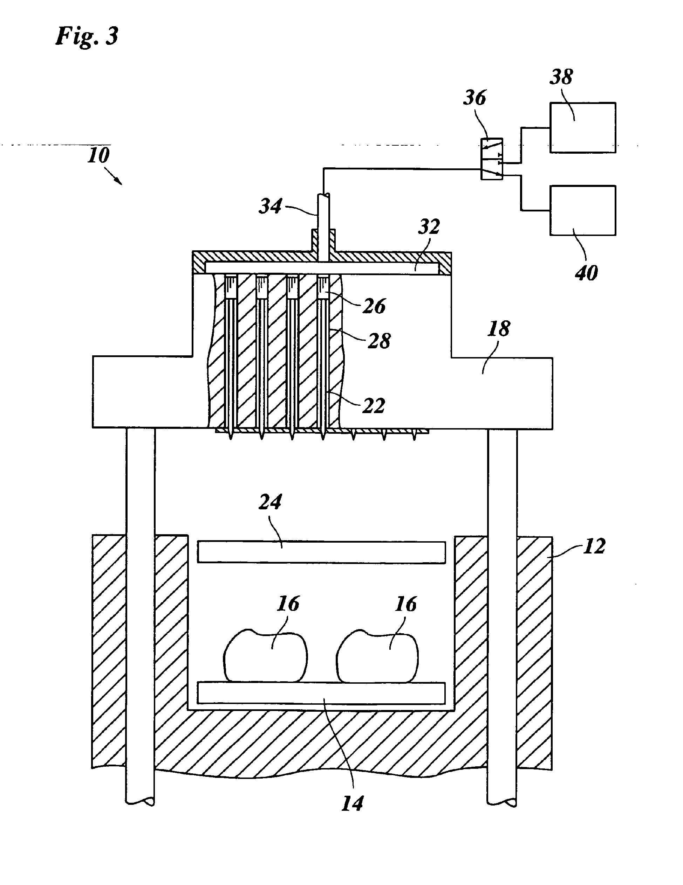

Wenn bei einem bestimmten Bearbeitungsprozeß die Funktion des Steakers 10 nicht benötigt wird, so braucht lediglich das Umschaltventil 36 in die in Figur 3 gezeigte Position umgeschaltet zu werden, so daß das Pneumatiksystem mit der Unterdruckquelle 40 verbunden wird. Der auf diese Weise in den Zylindern 28 erzeugte Unterdruck sorgt dafür, daß die Kolben 26 und die Nadeln 22 nach oben in den Nadelträger 18 zurückgezogen werden, wie ebenfalls in Figur 3 gezeigt ist. Der Hubweg der Kolben 26 ist durch nicht näher gezeigte Anschläge an den oberen Enden der Zylinder 28 begrenzt. Während des weiteren Betriebs der Vorrichtung kann der Hubantrieb für den Nadelträger 18 eingeschaltet bleiben, so daß sich der Nadelträger und auch der Niederhalter 24 weiterhin auf und ab bewegen, ohne daß die Nadeln 22 noch in die Lebensmittel 16 einstechen. Dieser Betriebsmodus wird als Durchlaufbetrieb bezeichnet.

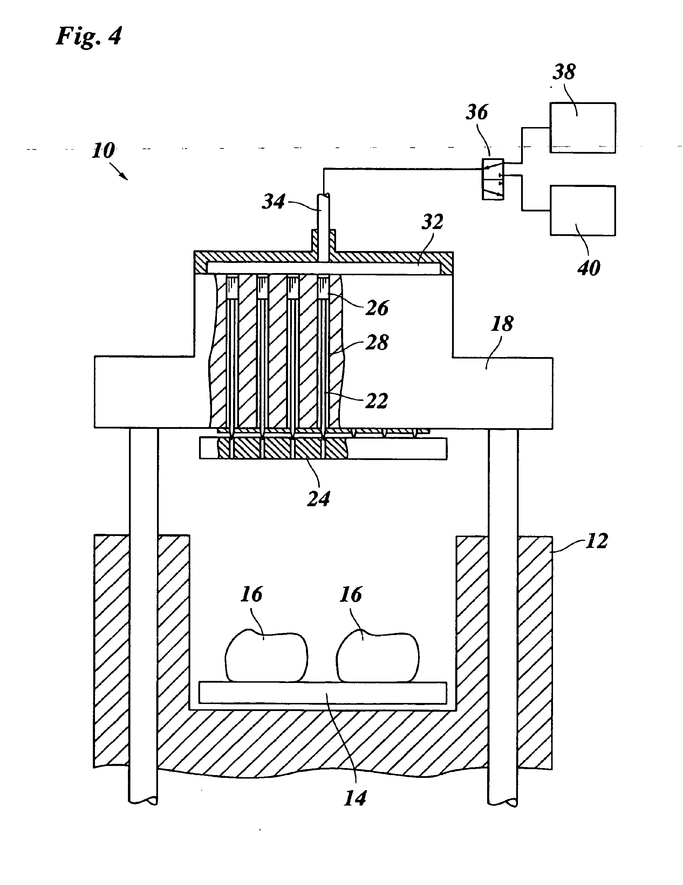

Wenn der Steaker 10 wieder vom Durchlaufbetrieb auf den aktiven Modus umgeschaltet werden soll, so wird vorzugsweise zunächst mit Hilfe eines nicht gezeigten Stellantriebs der Niederhalter 24 nach oben in die in Figur 4 gezeigte Position gezogen, in der er dicht unterhalb der Unterseite des Nadelträgers 18 liegt. Anschließend wird das Umschaltventil 36 wieder umgeschaltet, so daß die Kolben 26 und die Nadeln 22 durch die aus der Druckluftquelle 38 zugeführte Druckluft wieder nach unten getrieben werden. Der geringe Abstand zwischen dem Nadelträger 18 und dem Niederhalter 24 stellt sicher, daß die Spitzen der Nadeln 22 dabei zuverlässig und ohne beschädigt zu werden durch die Bohrungen des Niederhalters 24 hindurchtreten. Der Niederhalter 24 wird danach wieder in die normale Arbeitsposition gebracht.

In einer modifizierten Ausführungsform ist es auch möglich, den Stellantrieb für den Niederhalter 24 so anzusteuern, daß er beim Umschalten des Umschaltventils 36 auf Durchlaufbetrieb in die in Figur 4 gezeigte Position angehoben wird und dann während des gesamten Durchlaufbetriebs in dieser Position verbleibt. Besonders einfach läßt sich dies erreichen, wenn der Niederhalter 24 mit Hilfe von Druckluftzylindern pneumatisch gegen die Lebensmittel 16 vorgespannt ist. Bei geeigneter Dimensionierung der Wirkflächen dieser Druckluftzylinder können diese Druckluftzylinder direkt an die Druckluftleitung 34 angeschlossen sein, so daß sie beim Umschalten auf Durchlaufbetrieb automatisch durch den Unterdruck aus der Unterdruckquelle 40 beaufschlagt werden und somit den Niederhalter 24 nach oben ziehen. Die Längen der Nadeln 22 und die obere Endlage des Niederhalters 24 können dabei so gewählt sein daß die Nadelspitzen innerhalb des Niederhalters verbleiben, bis sie nach dem Umschalten auf die Druckluftquelle 38 gemeinsam, jedoch um unterschiedliche Wege nach unten bewegt werden.

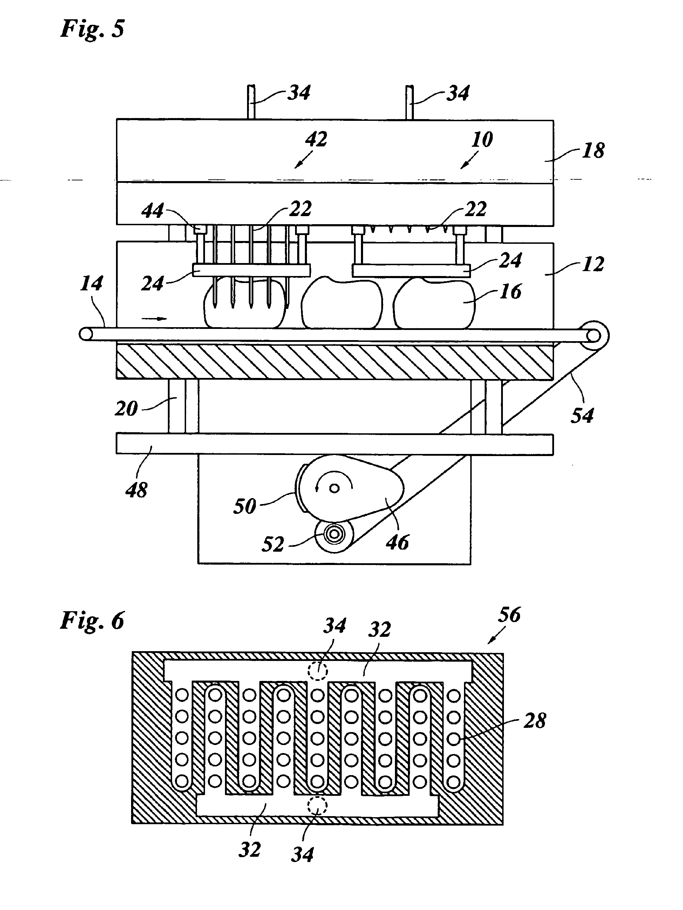

Figur 5 zeigt schematisch einen Längsschnitt durch eine Prozeßstraße mit einem Steaker 10 und einer Pökelvorrichtung 42, die von einem gemeinsamen Förderer 14, beispielsweise einem Förderband, durchlaufen werden. Der Steaker 10 hat den oben beschriebenen Aufbau. Die Pökelvorrichtung 42 ist analog zu dem Steaker 10 aufgebaut, und die Nadeln 22 des Steakers und der Pökelvorrichtung sind an einem gemeinsamen Nadelträger 18 angeordnet. Die Nadeln 22 der Pökelvorrichtung 42 sind hohl ausgebildet. Außerdem weist die Pökelvorrichtung ein an sich bekanntes Zufuhrsystem zur Zufuhr der Pökellake zu den Nadeln auf. Der Eintritt der Pökellake in die hohlen Nadeln kann beispielsweise jeweils über eine seitliche Öffnung der Nadel erfolgen, die sich unterhalb des Kolbens 26 in einem Nadelabschnitt befindet, der fluiddicht durch eine im Nadelträger 18 ausgebildete Zufuhrkammer hindurchgeführt ist. Ein Ventilsystem zur Steuerung der Lakezufuhr kann in bekannter Weise in Abhängigkeit von der Relativbewegung zwischen dem Niederhalter 24 und dem Nadelträger 18 gesteuert sein, so daß die Lake nur dann unter Druck in die Zufuhrkammer zugeführt wird, wenn der Niederhalter 24 auf den Lebensmitteln aufliegt und relativ zum Nadelträger nach oben verschoben wurde.

In Figur 5 sind die Niederhalter 24 jeweils an Pneumatikzylindern 44 gehalten, die vor und hinter den Nadelgruppen sitzen.

Im unteren Teil des Gestells 12 ist schematisch ein Nocken 46 gezeigt, der mit einem die unteren Enden der Hubstangen 20 verbindenden Träger 48 zuammenwirkt und so die Hubbewegung des Nadelträgers 18 steuert. Der Nocken 46 weist ein Zahnsegment 50 auf, das phasenweise mit einem Zahnrad 52 kämmt, das über einen Riemen- oder Kettentrieb 54 mit dem Antrieb des Förderers 14 verbunden ist. Auf diese Weise sind die Antriebe für den Förderer 14 und den Nadelträger 18 mechanisch so gekoppelt, daß das Förderband jeweils ein Stück vorrückt, wenn sich der Nadelträger 18 in der angehobenen Position befindet. Natürlich ist dieser Kopplungsmechanismus lediglich als ein Beispiel zu verstehen, und es sind zahlreiche andere Mechanismen denkbar.

Im gezeigten Beispiel ist der Steaker 10 auf Durchlaufbetrieb geschaltet, und seine Nadeln 22 sind in den Nadelträger 18 zurückgezogen, so daß nur die Pökelvorrichtung 42 wirksam ist. Bei Bedarf läßt sich jedoch der Steaker 10 einfach zuschalten, indem das zugehörige Umschaltventil 36 umgeschaltet wird. Wenn nur gesteakt und nicht gepökelt werden soll, kann mit Hilfe des Umschaltventils der Pökelvorrichtung 42 die Pökelvorrichtung auf Durchlaufbetrieb geschaltet werden.

In einer modifizierten Ausführungsform läßt sich die Erfindung beispielsweise auch dazu nutzen, die Dichte der wirksamen Nadeln eines Steakers zu variieren. Hierzu zeigt Figur 6 einen horizontalen Schnitt durch eine Verteilerplatte 56, die den Deckel des Nadelträgers 18 gemäß Figur 1 bildet und in der zwei Verteilerkammern 32 als kammförmig ineinandergreifende Kanalstrukturen ausgebildet sind. Jede Verteilerkammer 32 ist an eine gesonderte Druckluftleitung 34 angeschlossen, und zumindest eine dieser Druckluftleitungen ist über ein Umschaltventil 36 wahlweise an die Druckluftquelle 38 und die Unterdruckquelle 40 gemäß Figur 1 anschließbar. Die Mündungen der den einzelnen Nadeln 22 zugeordneten Zylinder 28 sind als Kreise dargestellt. Man erkennt, daß die Zylinder 28 mehrere, in Figur 6 senkrecht verlaufende, Spalten bilden, die abwechselnd an die eine und die andere Verteilerkammer 32 angeschlossen sind. Wenn eine dieser Verteilerkammern mit der Unterdruckquelle 40 verbunden wird, reduziert sich somit die Anzahl der wirksamen Nadeln auf die Hälfte, wobei diese Nadeln immer noch im wesentlichen gleichmäßig über die Fläche des Nadelträgers verteilt sind.

## Patentansprüche

1. Vorrichtung zur Bearbeitung von Lebensmitteln (16), mit einem Förderer (14) zur Zufuhr der Lebensmittel, einem Nadelträger (18), der eine Anzahl von Nadeln (22) trägt und in Bezug auf den Förderer (14) derart hin- und hergehend bewegbar ist, daß die Nadeln in die Lebensmittel (16) einstechen, und mit den einzelnen Nadeln zugeordneten Kolben (26) und Zylindern (28) und einem an die Zylinder angeschlossenen Fluidsystem (32, 34, 36, 38, 40) zur Steuerung einer Einfahrbewegung der Nadeln (22) in den Nadelträger (18), **dadurch gekennzeichnet, daß** das Fluidsystem (32, 34, 36, 38, 40) dazu ausgebildet ist, in den Zylindern (28) einen Unterdruck zu erzeugen, der ein Einziehen der Nadeln (22) in den Nadelträger (18) bewirkt.

2. Vorrichtung nach Anspruch 1, **dadurch gekennzeichnet, daß** das Fluidsystem (32, 34, 36, 38, 40) ein Pneumatiksystem ist.

3. Vorrichtung nach Anspruch 1 oder 2, **dadurch gekennzeichnet, daß** das Fluidsystem eine Druckquelle (38), eine Unterdruckquelle (40) und ein Umschaltventil (36) zum wahlweise Verbinden der Zylinder (28) mit der Druckquelle oder der Unterdruckquelle aufweist.

4. Vorrichtung nach einem der vorstehenden Ansprüche, **gekennzeichnet durch** einen von den Nadeln (22) durchsetzen Niederhalter (24), der relativ zum Nadelträger (18) in eine Position bewegbar ist, in der er in der Nähe der Spitzen der Nadeln (22) liegt, wenn diese in den Nadelträger (18) eingefahren sind.

5. Vorrichtung nach einem der vorstehenden Ansprüche, **dadurch gekennzeichnet, daß** die Nadeln (22) mehrere Gruppen bilden und daß das Fluidsystem (32, 34, 36, 38, 40) dazu ausgebildet ist, den Druck in den zu verschiedenen Gruppen gehörenden Zylindern (28) unabhängig zu steuern.

6. Vorrichtung nach Anspruch 5, **dadurch gekennzeichnet, daß** die Nadeln (22) der mehreren Gruppen ineinander verschachtelt angeordnet sind.

7. Vorrichtung nach Anspruch 5, **dadurch gekennzeichnet, daß** die Nadeln (22) der verschiedenen Gruppen hintereinander an einem gemeinsamen Förderer (24) angeordnet sind.

8. Vorrichtung nach einem der vorstehenden Ansprüche, **dadurch gekennzeichnet, daß** ein Hubantrieb (46) für den Nadelträger (18) mechanisch mit einem Antrieb für den Förderer (14) und/oder dem Antrieb einer gleichartigen, an demselben Förderer (14) angeordneten Vorrichtung gekoppelt ist.

## Claims

1. Apparatus for treating food (16), comprising a conveyer (14) for conveying the food, a needle carrier (18) which carries a number of needles (22) and is oscillatingly movable relative to the conveyer (14) such that the needles penetrate into the food (16), and pistons (26) and cylinders (28) associated with the individual needles, and a fluid system (32, 34, 36, 38, 40) connected to the cylinders for controlling a retreat movement of the needles (22) into the needle carrier (18), **characterized in that** the fluid system (32, 34, 36, 38, 40) is adapted to generate, in the cylinders (28), an underpressure that causes the needles (22) to be retracted into the needle carrier (18),

2. Apparatus according to claim 1, **characterized in that** the fluid system (32, 34, 36, 38, 40) is a pneumatic system.

3. Apparatus according to claim 1 or 2, **characterized in that** the fluid system comprises a pressure source (38), an underpressure source (40) and a switching valve (36) for selectively connecting the cylinders (28) to the pressure source and the underpressure source.

4. Apparatus according to any of the preceding claims, **characterized by** a pressing member (24) that is penetrated by the needles (22) and is movable relative to the needle carrier (18) into a position in which it is located in the vicinity of the tips of the needles (22) when the latter are retracted into the needle carrier (18).

5. Apparatus according to any of the preceding claims, **characterized in that** the needles (22) form plurality of groups and the fluid system (32, 34, 36, 38, 40) is adapted to control the pressure in the cylinders (28) associated with the different groups independently from one another.

6. Apparatus according to claim 5, **characterized in that** the needles (22) of the plurality of groups are arranged in an interleaved manner.

7. Apparatus according to claim 5, **characterized in that** the needles (22) of the different groups are arranged one behind the other at a common conveyer (14).

8. Apparatus according to any of the preceding claims, **characterized in that** a lift drive mechanism for the needle carrier (18) is mechanically coupled to a drive mechanism for the conveyer (14) and/or the drive mechanism of an apparatus of the same type that is arranged at the same conveyer (14).

## Revendications

1. Dispositif de traitement de denrées alimentaires (16), comportant un convoyeur (14) pour le transport des denrées alimentaires, un porte-aiguilles (18) portant une pluralité d'aiguilles (22) et mobile en va-et-vient par rapport au convoyeur (14) de telle sorte que les aiguilles s'enfoncent dans les denrées alimentaires (16), et comportant des pistons (26) et des cylindres (28) associés aux aiguilles individuelles et un système fluidique (32, 34, 36, 38, 40) raccordé aux cylindres pour commander un mouvement de rétraction des aiguilles (22) dans le porte-aiguilles (18), **caractérisé en ce que** le système fluidique (32, 34, 36, 38, 40) est conçu de manière à générer une dépression dans les cylindres (28) qui entraîne une rentrée des aiguilles (22) dans le porte-aiguilles (18).

2. Dispositif selon la revendication 1, **caractérisé en ce que** le système fluidique (32, 34, 36, 38, 40) est un système pneumatique.

3. Dispositif selon la revendication 1 ou 2, **caractérisé en ce que** le système fluidique comporte une source de pression (38), une source de dépression (40) et une soupape de commutation (36) pour relier sélectivement les cylindres (28) à la source de pression ou à la source de dépression.

4. Dispositif selon l'une quelconque des revendications précédentes, **caractérisé par** un support inférieur (24) traversé par les aiguilles (22), lequel support inférieur peut être déplacé par rapport au porte-aiguilles (18) jusqu'à une position dans laquelle il est à proximité des pointes des aiguilles (22) lorsque celles-ci sont rétractées dans le porte-aiguilles (18).

5. Dispositif selon l'une quelconque des revendications précédentes, **caractérisé en ce que** les aiguilles (22) forment plusieurs groupes et **en ce que** le système fluidique (32, 34, 36, 38, 40) est conçu de manière à commander indépendamment la pression dans les cylindres (28) appartenant à différents groupes.

6. Dispositif selon la revendication 5, **caractérisé en ce que** les aiguilles (22) des pluralités de groupes sont imbriquées les unes dans les autres.

7. Dispositif selon la revendication 5, **caractérisé ce que** les aiguilles (22) des différents groupes sont agencées les unes derrière les autres sur un convoyeur commun (24).

8. Dispositif selon l'une quelconque des revendications précédentes, **caractérisé en ce qu'**un mécanisme de levage (46) pour le porte-aiguilles (18) est mécaniquement couplé à un mécanisme d'entraînement du convoyeur (14) et/ou au mécanisme d'entraînement d'un dispositif analogue agencé sur le même convoyeur (14).
